(19) Europäisches Patentamt
European Patent Office
Office européen des brevets

(11) EP 3 933 304 A1

(12) **EUROPÄISCHE PATENTANMELDUNG**

(43) Veröffentlichungstag:
**05.01.2022   Patentblatt 2022/01**

(51) Int Cl.:
**F25B 15/02** (2006.01)      **F25B 15/04** (2006.01)
**F25B 25/00** (2006.01)

(21) Anmeldenummer: **21181048.6**

(22) Anmeldetag: **23.06.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **02.07.2020   DE 102020117462**

(71) Anmelder: **Bangheri, Andreas**
**6230 Brixlegg (AT)**

(72) Erfinder: **Bangheri, Andreas**
**6230 Brixlegg (AT)**

(74) Vertreter: **Schwan Schorer & Partner mbB**
**Patentanwälte**
**Bauerstraße 22**
**80796 München (DE)**

(54) **VERFAHREN ZUM BETREIBEN EINER ABSORPTIONSWÄRMEPUMPE**

(57)   Die vorliegende Erfindung betrifft ein Verfahren zum Steuern einer Absorptionswärmepumpe in einem zyklischen Kreisprozess.

Erfindungsgemäß wird mindestens zeitweise und / oder während einer Startphase der Absorptionswärmepumpe an einer Stelle nach der Entnahme eines Dampf-gemischs aus einem Generator (20) und vor der Zuführung an einen Kondensator (30) die Temperatur $T_1$ und der Druck $P_1$ des entnommenem Dampfgemischs gemessen und aus diesen Daten das Mischungsverhältnis des Dampfgemischs ermittelt wird.

FIG. 1

EP 3 933 304 A1

**Beschreibung**

Die vorliegende Erfindung betrifft ein Verfahren zum Betreiben einer Absorptionswärmepumpe.

Ein Verfahren gemäß dem Oberbegriff von Anspruch 1 ist aus der EP 1 045 214 A2 bekannt.

Absorptionswärmepumpen werden in einem zyklischen Kreisprozess betrieben. Bei einem solchen Kreisprozess wird zunächst Generator mittels einer Wärmequelle erhitzt, um ein Dampfgemisch aus Kältemitteldampf und Lösungsmitteldampf aus einer Lösung auszutreiben. Das Dampfgemisch wird dann dem Generator in einem Kopfbereich eines Rektifikators entnommen und in einem Kondensator kondensiert, wobei Kondensationswärme durch den Kondensator, der als Wärmetauscher ausgebildet ist, einem Verbraucher zugeführt wird. Aus dem vollständig oder teilweise kondensierten Dampfgemisch wird so ein Fluid (Dampf oder eine Mischung aus Dampf und Flüssigkeit) erzeugt und mittels eines Expansionsventils wird das Fluid expandiert. Das expandierte Fluid wird einem Verdampfer zugeführt zum mindestens teilweisen Verdampfen des expandierten Fluids unter Wärmeaufnahme aus einer Wärmequelle. Die Wärmequelle kann dabei die einen Luftverdampfer umgebende Außenluft sein oder eine Wärmesonde oder ein Flächenverdampfer in einem Erdreich.

Anschließend wird das Fluid einem Absorber zugeführt, wo es mit einer kältemittelarmen Lösung vermischt und von dieser absorbiert wird. Die dabei entstehende Wärme wird ebenfalls dem Verbraucher zugeführt. Die kältemittelarme Lösung wird hierzu aus einem Bodenbereich des Generators abgezogen und zum Absorber geleitet. Die kältemittelreiche Lösung, die so im Absorber entsteht, wird dem Generator zugeführt, um den Kreisprozess zu schließen.

Nachteilig an solchen bekannten Verfahren ist die Tatsache, dass das Dampfgemisch, welches aus einem oberen Bereich des Generators entnommen wird, ein sehr variables Mischungsverhältnis von Kältemitteldampf zu Lösungsmitteldampf aufweist, was die Regelung der Wärmepumpe erschwert. Es kann daher nicht gewährleistet werden, dass die Wärmepumpe bei unterschiedlichen Leistungen jeweils mit bestmöglicher Effizienz betrieben wird.

Es ist daher Aufgabe der vorliegenden Erfindung, bekannte Verfahren zum Betreiben einer Absorptionswärmepumpe diesbezüglich zu verbessern und somit die Effizienz von Absorptionswärmepumpen zu erhöhen.

Diese Aufgabe wird gelöst gemäß einem Verfahren entsprechend dem Kennzeichen von Anspruch 1.

Erfindungsgemäß wird mindestens zeitweise und / oder während einer Startphase der Absorptionswärmepumpe an einer Stelle nach der Entnahme des Dampfgemischs aus dem Generator und vor der Zuführung an den Kondensator die Temperatur und der Druck des entnommenem Dampfgemischs gemessen und aus diesen Daten das Mischungsverhältnis des Dampfgemischs ermittelt.

Die bietet den Vorteil, dass die Reinheit des Dampfgemischs (Anteil des Kältemittels) jederzeit oder zumindest in festgelegten Zeitabständen bekannt ist, und die Regelung der Wärmepumpe entsprechend optimiert werden kann. Aus grundsätzlich bekannten Daten für zahlreiche binäre Gemische kann jedem Wertepaar bestehend aus einer Temperatur und einem Druck ein Mischungsverhältnis zugeordnet werden. Selbstverständlich können solche Daten für neue Gemische auch gewonnen werden, indem verschiedenen Mischungsverhältnisse erzeugt und mit festgelegten Drücken beaufschlagt werden, und die resultierende Kondensationstemperatur gemessen wird. Für ein binäres Gemisch aus Ammoniak als Kältemittel und Wasser als Lösungsmittel sind entsprechend Daten seit langem bekannt (siehe zum Beispiel:

Merkel-Bošnjakovic; Wärmeinhalts-Zusammensetzungs-i$\xi$-Diagramm für Wasser-Ammoniak-Gemische).

Je nachdem in welchem Leistungsbereich die Wärmepumpe (an den Verbraucher abgegebene Wärme je Zeiteinheit) arbeitet, werden unterschiedliche Massenströme durch den Generator bewegt, welcher je nach Volumenstrom unterschiedlich effizient arbeitet, also unterschiedlich effizient Kältemittel und Lösungsmittel separiert. Wird die Wärmepumpe mit einer höheren Leistung betrieben oder durchläuft eine Anlauf- oder Startphase, so wird das Dampfgemisch einen höheren Wasseranteil aufweisen, als bei einem kontinuierlichen oder eingeschwungenen Betrieb der Wärmepumpe.

Die Reinheit des dem Generator entzogenen Dampfgemisches beeinflusst aber wesentlich die Leistung des Rektifikators und die Kondensationstemperatur und somit das Kondensationsverhalten des Dampfgemisches im Kondensator.

Die Ermittlung des Mischungsverhältnisses dient der Verbesserung der Effizienz der Absorptionswärmepumpe.

Der Erfindung liegt die Strategie zugrunde, dass über einen Drucksensor im Hochdruckteil des Absorptionskreislaufes der "Hochdruck" des Kreisprozesses ermittelt, also der Druck im Bereich vor dem Expansionsventil. Zusammen mit der ebenfalls im Bereich nach der Entnahmestelle des Dampfgemisches aus dem Generator wird die Temperatur des Dampfgemisches ermittelt und anhand bekannter Tabellen kann so die Dampffreiheit bestimmt werden, also der Anteil von Lösungsmitteldampf am Dampfgemisch insgesamt. Entsprechende Werte für die Dampffreiheit können zur Ausführung des Verfahrens in einem Speicher der Absorptionswärmepumpe hinterlegt werden.

Bevorzugte Ausgestaltungen des erfindungsgemäßen Verfahrens ergeben sich aus den Unteransprüchen.

Bei einer ersten besonders bevorzugten Ausgestaltung des erfindungsgemäßen Verfahrens wird die Hochdruckseite einer Absorptionswärmepumpe geregelt.

Erfindungsgemäß wird zunächst eine dem Mischungsverhältnis und dem Druck des Dampfgemischs entsprechende Kondensationstemperatur $kT_2$ des Dampfgemischs ermittelt. Die Kondensationstemperatur $kT_2$ wird dabei ebenfalls anhand bekannter und abgelegter Tabellen oder Formeln vorgenommen.

Anschließend werden die Temperaturen $T_2$ und $T_3$ des aus dem Kondensator austretenden und des in den Kondensator eintretenden Verbraucherkreislauffluids gemessen. Optional kann auch noch die Temperatur $T_4$ des aus dem Kondensator austretenden Fluids des Kreisprozesses gemessen werden.

Aus diesen Werten wird in festgelegten zeitlichen Abständen eine Stellgröße A1 ermittelt gemäß der Formel:

$$A1 = \left( kT_2 - \frac{(T_2 + T_3)}{2} + SD \right)$$

Eine typische Drucktemperaturkorrektur für KT2 bei Verwendung eines AmmoniakWasser Gemischs ist der folgenden Tabelle zu entnehmen:

| Druck | T1 | T2 | Dampfreinheit (Ammoniakanteil) | KT2 |
|---|---|---|---|---|
| 17,82 Bar | 45°C | 45°C | 100% | 45°C |
| 17,82 Bar | 45°C | 98°C | 96% | 47,2°C |

Optional - falls auch $T_4$ gemessen wird, wird die Stellgröße A1 gemäß der folgenden Formel berechnet:

$$A1 = \left( kT_2 - \frac{(T_2 + T_3)}{2} + SD \right) - T_4$$

SD stellt dabei eine festgelegte Solldifferenztemperatur dar. Alle Temperaturen werden in Kelvin angegeben.

Das Expansionsventil wird nun so gesteuert wird, dass:

    i. das Expansionsventil (gegenüber der aktuellen Stellung) weiter geschlossen wird, wenn die Stellgröße A1 negativ ist,

    ii. das Expansionsventil in seiner Stellung unverändert belassen wird, wenn die Stellgröße A1 null ist, und

    iii. das Expansionsventil weiter geöffnet wird, wenn die Stellgröße A1 positiv ist.

Die Regelung des Expansionsventils bietet den Vorteil, dass durch die Steuerung des Expansionsventils die Temperatur im Kondensator so eingestellt wird, dass sie nur um eine festgelegte Soll-Differenz vom Temperaturmittel des Verbraucherkreislaufs abweicht. Ist die ermittelte Kondensationstemperatur zu hoch, (A1 positiv) reduziert die weitere Öffnung des Expansionsventils den Druck im Hochdruckabschnitt, wodurch die Kondensationstemperatur reduziert wird. Ist umgekehrt die ermittelte Kondensationstemperatur zu niedrig, (A1 negativ) erhöht die weitere Schließung des Expansionsventils den Druck im Hochdruckabschnitt, wodurch die Kondensationstemperatur erhöht wird.

Optional kann der Soll-Differenzwert Schwell-Differenzwert zur Regelung noch mit der Temperatur $T_4$ des aus dem Kondensator austretenden Fluids des Kreisprozesses verglichen werden.

Insbesondere aufgrund der Tatsache, dass der Druckunterschied zwischen Hochdruckseite und Niederdruckseite der Absorptionswärmepumpe deren Wirkungsgrad maßgeblich beeinflusst, wird durch eine entsprechende Steuerung des Expansionsventils die Effizienz der Absorptionswärmepumpe wesentlich beeinflusst.

Das Ziel ist ein Druck auf der Hochdruckseite der Wärmepumpe der möglichst niedrig ist, um die Wärmeleistung, die dem Generator zugeführt werden muss, möglichst klein zu halten. Andererseits muss dieser Druck noch hoch genug sein, um eine Kondensation zuzulassen, die für die optimale Wärmeabgabe an den Verbraucher notwendig ist. Niederdruckseitig soll der Druck so niedrig sein, dass alles Kältemittel verdampft, um optimal Wärme aufzunehmen. Ein zu niedriger Druck erfordert hingegen einen großen Massenstrom an kältemittelarmer Lösung.

Durch die Steuerung des Expansionsventils dermaßen, dass der Kondensationsdruck und die daraus resultierenden Kondensationstemperatur des Dampfgemisches auf die gemittelte Temperatur im Verbraucherkreislauf unter Einbeziehung eines Solldifferenzwertes so geregelt wird, das eine vollständige Kondensation des binären Gemisches stattfindet, wird der Wirkungsgrad der Wärmepumpe verbessert.

Würde die Wärmepumpe mit einer im Vergleich zur mittleren Temperatur $(T_2+T_3)/2$ zu niedrigen Kondensationstemperatur betrieben, würde das Dampfgemisch nicht mehr kondensieren, wodurch keine Kondensationswärme an den Verbraucher abgeführt werden würde.

Würde die Wärmepumpe mit einer im Vergleich zu hohen mittleren Temperatur $(T_2+T_3)/2$ würde ein unnötig hoher Kondensationsdruck erzeugt und die Effizienz signifikant verschlechtert. Es würde insbesondere unnötig viel Wärme dem Generator zugeführt werden.

In einer weiteren bevorzugten Ausgestaltung des erfindungsgemäßen Verfahrens wird die Niederdruckseite der Wärmepumpe geregelt, indem:

a) ein Druck $P_2$ des Fluids an einer Stelle hinter dem Expansionsventil (40) gemessen wird,

b) eine dem Mischungsverhältnis und dem Druck $P_2$ des expandierten Fluids entsprechende Verdampfungstemperatur $kT_7$ des Fluids im Verdampfer (50) ermittelt wird,

c) die Temperaturen $T_6$ und $T_5$ des aus dem Verdampfer (50) austretenden und des in den Verdampfer (50) eintretenden Energiequellenkreislauffluids gemessen werden,

d) optional die Temperatur $T_7$ des aus dem Verdampfer (30) austretenden Fluids des Kreisprozesses gemessen wird,

e) in festgelegten zeitlichen Abständen eine Stellgröße A2 ermittelt wird gemäß folgender Formel:

$$A2 = \left( kT_7 - \frac{(T_5 + T_6)}{2} + SD \right)$$

optional gemäß der Formel:

$$A2 = \left( kT_7 - \frac{(T_5 + T_6)}{2} + SD \right) - T_7$$

wobei SD eine festgelegte Solldifferenztemperatur darstellt und alle Temperaturen in Kelvin angegeben sind, und

f) die Lösungsmitteldrossel (56) so gesteuert wird, dass:

I. das Lösungsmitteldrossel (56) weiter geschlossen wird, wenn die Stellgröße A2 negativ ist, (um den Druck im Verdampfer zu erhöhen),

II. die Lösungsmitteldrossel in ihrer Stellung unverändert belassen wird, wenn die Stellgröße A null ist, und

III. das Lösungsmitteldrossel (56) weiter geöffnet wird wenn die Stellgröße A positiv ist, (um den Druck im Verdampfer zu reduzieren)

Im Verfahrensschritt a) wird wiederum anhand bekannter Tabellen aus dem vorher ermittelten Mischungsverhältnis und dem gemessenen Druck des Fluids im Verdampfer die Verdampfungstemperatur des Fluids im Verdampfer ermittelt.

Dies bietet den Vorteil, dass bei einer zu hohen Verdampfungstemperatur des Fluids im Verdampfer der Druck im Verdampfer und somit die Verdampfungstemperatur reduziert und näher an die gemittelte Temperatur des Energiequellenkreislauffluids gebracht wird. Ein Öffnen der Lösungsmitteldrossel bewirkt dies, da dann mehr kältemittelarme Lösung dem Generator entnommen und dem Absorber zugeführt wird.

Dies bietet den, dass die Effizienz der Wärmeübertragung im Verdampfer verbessert wird, da ein zu hoher Druck dazu führen würde, dass das Kältemittel keine Energie mehr aufnimmt und ein zu niedriger Druck die Kälteleistung reduzieren würde.

Bei einem zu hohen Verdampfungsdruck ist aufgrund der unvollständigen Verdampfung die Energieaufnahme zu gering und daher die Kälteleistung reduziert. Bei einem zu niedrigen Verdampfungsdruck ist Kälteleistung zwar gut, aber der damit verbundene große Massenstrom an lösungsmittelarmen Lösung führt zu einem einen höheren Brennerleistungsbedarf und somit zu einem einen Effizienzverlust.

Vorzugsweise ist die Solltemperaturdifferenz SD in einem Bereich von 0,2 K bis 7 K, vorzugsweise in einem Bereich von 1,5 K und 5 K liegt.

Die Temperaturen $T_2$ und $T_3$ des aus dem Kondensator (30) austretenden und des in den Kondensator (30) eintretenden Verbraucherkreislauffluids liegen vorzugsweise in einem Bereich 20°C bis 60°C, besonders bevorzugt in einem Bereich von 30°C bis 50°C.

Das Mischungsverhältnis entspricht vorzugsweise einem Anteil von Kältemitteldampf von 15% bis 99,9998% am Dampfgemisch.

Vorzugsweise liegen die Temperaturen $T_6$ und $T_5$ des aus dem Verdampfer (50) austretenden und des in den Verdampfer (50) eintretenden Energiequellenkreislauffluids in einem Bereich von -20 °C bis +20 °C, besonders bevorzugt in einem Bereich von - 15°C bis +15°C.

Zur Ermittlung des Mischungsverhältnisses des Dampfgemischs kann eine hinterlegte Tabelle oder Formel verwendet werden, mittels derer Werte für das Mischungsverhältnis als Funktion von Temperatur $T_1$ und der Druck $P_1$ abgeleitet werden.

Zur Ermittlung der Kondensationstemperatur $kT_2$ und / oder der Verdampfungstemperatur $kT_7$ kann ebenfalls ein eine hinterlegte Tabelle oder Formel verwendet wird, mittels derer Werte für die jeweilige Temperatur als Funktion von des Drucks und des Mischungsverhältnisses abgeleitet werden.

Besonders bevorzugt ist eine Verfahren bei welchem zum mindesten vorübergehendend Erreichen eines festgelegten erhöhten Temperaturbereichs im Verbraucherkreislauf ein Heißgasmodus vorgesehen ist, in welchem das Expansionsventil so eingestellt wird, dass das Dampfgemisch vor den Eintritt in das Expansionsventil einen Druck $P_1$ aufweist, der einem festgelegten maximalen Hochdruckwert entspricht. Dieser maximal Hochdruckwert kann ein Maximaldruck sein, bis zu dem der Generator für den Betrieb zugelassen ist.

In einem solchen Heißgasmodus kann vorgesehen sein, dass im Kondensator keine Kondensation mehr stattfindet. Ein reiner Gasheizungsbetreib kann zu erreicht werden.

Vorzugsweise wird als Kältemittel Ammoniak und als Lösungsmittel Wasser verwendet wird.

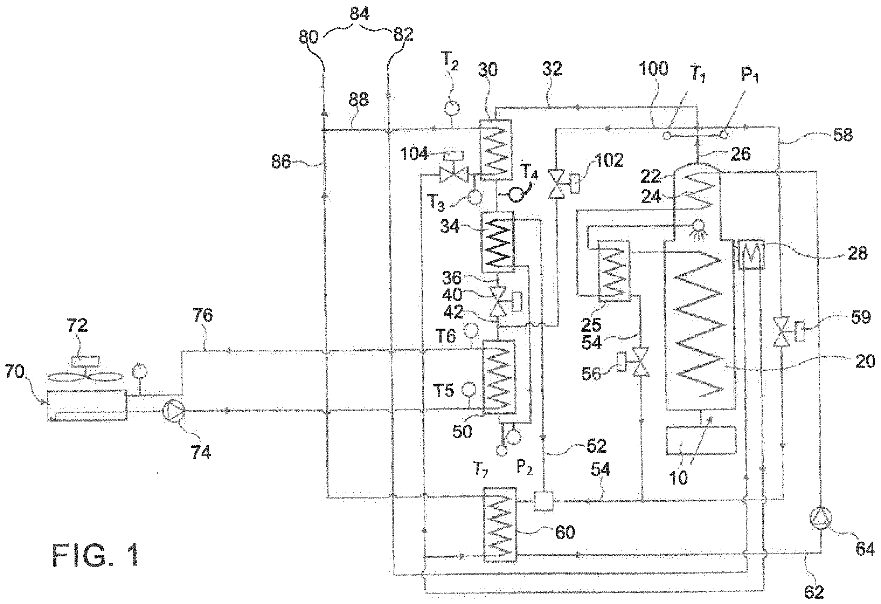

Im Folgenden wir die Erfindung anhand der Figuren 1 beispielhaft näher erläutert. Dabei zeigt:

Fig. 1    eine Absorptionswärmepumpe, die mit einem erfindungsgemäßen Verfahren betreiben wird.

Fig. 1 zeigt eine Absorptionswärmepumpe, die einen Gasbrenner 10, einen Generator 20, einen Kondensator 30, ein Expansionsventil 40, einen Verdampfer 50 und einen Absorber 60 aufweist, die einen zyklischen Kreisprozess ermöglichen. Der Generator 20 beinhaltet eine Lösung, die ein Kältemittel aufweist. Als Kältemittel kann beispielsweise Ammoniak verwendet werden, welches in Wasser gelöst ist.

Während die Fig. 1 eine erfindungsgemäße Absorptionswärmepumpe, die nur einen einzigen Absorber 60 aufweist, kann das Verfahren der vorliegenden Erfindung auch bei einer eine Absorptionswärmepumpe für einen mehrstufigen Prozess mit zwei Absorbern, nämlich einem Vorabsorber und einem Verbraucherabsorber, die mit einem GAX-Prozess (GAX = Generator/Absorber Heat Exchange) angewendet werden.

Der Generator 20 steht mit einer Wärmequelle in Verbindung, die im vorliegenden Fall als Gasbrenner 10 ausgebildet ist, und Wärme dem Generator 20 zuführen kann. Alternativ kann ein Wärmetauscher vorgesehen sein, der Umgebungswärme oder Abwärme aufnehmen und an den Generator 20 abgeben kann. Ein solcher Wärmetauscher kann ferner auch mittels Solarenergie durch Sonnenkollektoren erwärmt werden. Durch die Zufuhr von Wärme an den Generator 20 wird Kältemittel als Kältemitteldampf aus der Lösung ausgetrieben.

Der Kältemitteldampf bildet zusammen mit einem Restanteil von Lösungsmitteldampf ein Dampfgemisch, welches durch diesen Vorgang auf ein Hochtemperaturniveau $T_1$ Hochdruckniveau $P_1$ gebracht.

Aus einem Auslass 26 wird in einem oberen Bereich des Generators das heiße Dampfgemisch, abgezogen und eines Temperatursensors die Temperatur $T_1$ und mittels eines Drucksensors der Druck $P_1$ gemessen. Mittels dieser beiden Werte kann wie oben erläutert das Mischungsverhältnis aus hinterlegten Tabellen bestimmt werden. Es wird als bei dem Verfahren nicht wie bisher bekannt ein Mischungsverhältnis angenommen (z.B. reiner Ammoniakdampf bei Verwendung von Ammoniak und Wasser als Kälte- und Lösungsmittel), sondern das Verhältnis wird wiederholt ermittelt und bei der Steuerung der Wärmepumpe berücksichtigt.

Das Dampfgemisch wird dann über eine Leitung 32 einem Kondensator 30 zugeführt und dort kondensiert. Der Kondensator 30 ist dabei als Wärmetauscher ausgeführt und führt einem Kondensatorzweig 88 eines Verbraucherkreislaufs 84 Kondensationswärme zu, welches mittels des Verbraucherkreislaufs 84 einem Vorlaufanschluss 80 zugeführt wird. Am Vorlaufanschluss 80 ist ein nicht näher dargestellter thermischer Nutzer angeschlossen, beispielsweise eine Heizung für ein Gebäude, die als Fußbodenheizung ausgebildet sein kann oder alternativ (oder zusätzliche) Heizkörper aufweist.

Mittels entsprechender Temperatursensoren werden die die Temperaturen $T_2$ und $T_3$ des aus dem Kondensator (30) austretenden und des in den Kondensator (30) eintretenden Verbraucherkreislauffluids gemessen, optional auch die Temperatur $T_4$ des aus dem Kondensator (30) austretenden Fluids des Kreisprozesses. Die Kondensationstemperatur $kT_2$ des Dampfgemischs wird anhand hinterlegter Werte aus dem Mischungsverhältnis und dem Druck $P_1$ ermittelt. Die Stellgröße A1 wird bestimmt gemäß der oben angegebenen Formel und bei negativer Stellgröße des Expansionsventil (40) weiter geschlossen bzw. bei positiver Stellgröße weiter geöffnet.

Nach dem Durchlaufen des Kondensators 30 und eines Zwischenwärmetauschers 34 wird über eine Leitung 36 für Fluid das mindestens teilweise oder vollständig kondensierte Dampfgemisch durch ein Expansionsventil 40 geführt und expandiert. Nach dem Durchlaufen des Expansionsventils 40 ist das Fluid bereits stark abgekühlt und auf ein Niederdruckniveau entspannt und wird über eine Leitung 42 zu einem Verdampfer 50 weitergeführt.

Der Druck $P_2$ des Fluids des Kreisprozesses wird an einer Stelle hinter dem Expansionsventil 40 mittels eines Drucksensors gemessen, der in der Fig.1 nach dem Verdampfer 50 angeordnet ist. Eine dem Mischungsverhältnis und dem Druck $P_2$ des expandierten Fluids entsprechende Verdampfungstemperatur $kT_7$ des Fluids im Verdampfer 50 wird ermittelt. Die Temperaturen $T_6$ und $T_5$ des aus dem Verdampfer 50 austretenden und des in den Verdampfer 50 eintretenden Energiequellenkreislauffluids (Solekreislauf 76) gemessen werden, optional auch die Temperatur $T_7$ des aus dem Verdampfer 30 austretenden Fluids des Kreisprozesses. In festgelegten zeitlichen Abständen eine Stellgröße A2 ermittelt wird gemäß der oben aufgeführten Formel. Die Lösungsmitteldrossel (56) wird wie bereits erläutert nachgeregelt (weiter schließen, wenn A2 negativ ist, weiter öffnen, wenn A2 positiv ist).

Im Verdampfer 50 wird das Fluid nun verdampft und dem Absorber 60 zugeführt.

Dem Absorber 60 ebenfalls zugeführt wird eine kältemittelarme Lösung über eine Absorberzufuhrleitung 54, die aus einem unteren Bereich des Generators 20 diesem vorher entnommen wurde. Im Absorber 60 wird die an Kältemittel verarmte Lösung mit dem Fluid, welches den Verdampfer 50 durchlaufen und über die Absorberzufuhrleitung 52 dem Absorber 60 zugeführt wurde, vereinigt. Die durch die Lösung des Kältemittels in der kältemittelarmen Lösung entstehende Lösungswärme wird dem Austreiberprozess an den Verbraucher abgeführt. Die dabei entstehende an Kältemittel reiche Lösung wird von dem Absorber 60 mittels einer Lösungspumpe 64 erneut dem Generator 20 zugeführt.

Zum Verdampfen des Fluids im Verdampfer 50 wird aus der Umgebungsluft Wärme entnommen. Hierzu steht der Verdampfer 50 im Wärmeaustausch mit einem Außenluftwärmetauscher 70, welcher einen Ventilator 72 aufweisen kann. Der Wärmeaustausch zwischen dem Außenluftwärmetauscher 70 und dem Verdampfer 50 erfolgt über den Solekreislauf 76, in welchem mittels einer Solepumpe 74 eine Sole umgewälzt wird. Alternative kann Wärme dem Erdreich oder einem Gewässer entzogen werden. Im Erdreich können hierzu vertikale Erdwärmesonden oder erdverlegte Flächenverdampfer verwendet werden.

Die Wärmeabgabe der Absorptionswärmepumpe an den Verbraucher erfolgt in der Ausführungsform der Fig. 1 wie bereits erläutert, zum einen über den Kondensatorzweig 88 mittels welchem Kondensationswärme aus dem Kondensator 30 dem Verbraucherkreislauf 84 zugeführt wird. Als weitere Wärmequelle dient der Absorber 60, mittels welchem Lösungswärme der Absorption des Kältemittels durch das Lösungsmittel einem Absorberzweig 86 ebenfalls dem Verbraucherkreislauf 84 zugeführt wird, und somit ebenfalls dem Verbraucher. Hierzu verzweigt sich der Verbraucherkreislauf 84 von einem Rücklaufanschluss 82 vom Verbraucher kommend in den Absorberzweig 86 und den Kondensatorzweig 88 auf, wobei beide Zweige vor dem Vorlaufanschluss 80 wieder zu einem einzigen Abschnitt des Verbraucherkreislaufs 84 vereinigt werden.

Vor der Verzweigung des Verbraucherkreislaufs 84 in den Absorberzweig 86 und den Kondensatorzweig 88 wird der Verbraucherkreislauf 84 durch einen zweiten Wärmetauscher 28 geführt, der in einem oberen Bereich des Generators 20, also einem vergleichsweise warmen Bereich, angeordnet ist, um das kalte Heizmittel, welches durch den Rücklaufanschluss 82 vom Verbraucher zurück kommt, vorzuwärmen.

Wie bereits erläutert, wird aus dem Absorber 60 eine kältemittelreiche Lösung entnommen und über die Leitung 62 für kältemittelreiche Lösung und die Lösungsmittelpumpe 64 wieder dem Generator 20 zugeführt. Hierzu durchläuft die kältemittelreiche Lösung zunächst über einen Wärmetauscher 24 einen Rektifikator 22 des Generators 20. Bevor die kältemittelreiche Lösung endgültig in einen oberen Bereich des Generators 20 in diesen eingespritzt wird, durchläuft sie noch einen weiteren Wärmetauscher 25, in welchem ein Wärmeaustausch mit der aus dem unteren Bereich des Generators abgezogenen kältemittelarmen Lösung (die über die Absorberzufuhrleitung 54 dem Absorber 60 zugeführt wird) steht, um die kältemittelreiche Lösung vorzuwärmen.

In der Absorptionswärmepumpe ist optional ein Zwischenwärmetauscher 34 vorgesehen, der von dem verdampften Kältemittel, welches dem Verdampfer entnommen wurde, durchströmt wird, bevor dieses durch die Absorberzufuhrleitung 52 für Kältemittel dem Absorber 60 zugeführt wird. Im Zwischenwärmetauscher 34 findet ein Wärmeaustausch mit kondensiertem Kältemittel statt, welches vor dem Zwischenwärmetauscher 34 dem Kondensator 30 entnommen und nach dem Zwischenwärmetauscher 34 dem Expansionsventil 40 zugeführt wird. Im Zwischenwärmetauscher 34 wird daher Wärme vom kondensierten Kältemittel oder Kältemittelfluid auf das verdampfte Kältemittel übertragen.

**Bezugszeichenliste**

10   Wärmetauscher

| 20 | Generator |
|---|---|
| 22 | Rektifikator |
| 24 | Wärmetauscher |
| 25 | Wärmetauscher |
| 26 | Auslass für Dampfgemisch |
| 28 | zweiter Wärmetauscher |
| 30 | Kondensator |
| 32 | Leitung für Dampfgemisch |
| 34 | Zwischenwärmetauscher |
| 36 | Leitung für Fluid |
| 40 | Expansionsventil |
| 42 | Leitung für expandiertes Fluid |
| 50 | Verdampfer |
| 52 | Absorberzufuhrleitung für Fluid |
| 54 | Absorberzufuhrleitung für kältemittelarme Lösung |
| 56 | Lösungsmitteldrossel |
| 58 | Dampfbypassleitung |
| 59 | Kesselbetriebsventil |
| 60 | Absorber |
| 62 | Leitung für reiche Lösung |
| 64 | Lösungspumpe |
| 44 | Leitung für reiche Lösung |
| 70 | Außenluftwärmetauscher |
| 72 | Ventilator |
| 74 | Solepumpe |
| 76 | Solekreislauf |
| 80 | Vorlaufanschluss |
| 82 | Rücklaufanschluss |
| 84 | Verbraucherkreislauf |
| 86 | Absorberzweig |
| 88 | Kondensatorzweig |
| 100 | Heißgasleitung |
| 102 | Abtauventil |
| 104 | Hydraulikabsperrventil |

## Patentansprüche

1. Verfahren zum Steuern einer Absorptionswärmepumpe in einem zyklischen Kreisprozess, wobei:

eine Wärmequelle einen Generator (20) erhitzt um ein Dampfgemisch aus Kältemitteldampf und Lösungsmitteldampf aus einer im Generator beinhalteten Lösung von Kältemittel in Lösungsmittel auszutreiben,
das Dampfgemisch dem Generator entnommen und einem Kondensator (30) zugeführt wird, welcher als Wärmetauscher ausgebildet ist und von einem Verbraucherkreislauffluid eines Verbraucherkreislaufs durchströmt wird und mittels Wärmeabgabe an das Verbraucherkreislauffluid das Dampfgemisch abkühlt und dabei teilweise kondensiert um ein Fluid des Kreisprozesses zu erhalten,
das Fluid einem Expansionsventil (40) zugeführt wird, welches das Fluid expandiert,
das expandierte Fluid einem Verdampfer (50) zugeführt wird zum mindestens teilweisen Verdampfen des expandierten Fluids unter Wärmeaufnahme aus einer Energiequelle,
das Fluid einem Absorber (60) zugeführt wird, wo es von einer kältemittelarmen Lösung absorbiert wird, die aus dem Generators abgezogen wird, um eine kältemittelreiche Lösung zu erzeugen,
die kältemittelreiche Lösung dem Generator (20) zugeführt wird;

**dadurch gekennzeichnet, dass**

mindestens zeitweise und / oder während einer Startphase der Absorptionswärmepumpe an einer Stelle nach der Entnahme des Dampfgemischs aus dem Generator (20) und vor der Zuführung an den Kondensator (30) die Temperatur $T_1$ und der Druck $P_1$ des entnommenem Dampfgemischs gemessen und aus diesen Daten das Mischungsverhältnis des Dampfgemischs ermittelt wird.

2. Verfahren nach Anspruch1, **dadurch gekennzeichnet, dass**:

a) eine dem Mischungsverhältnis und dem Druck des Dampfgemischs entsprechende Kondensationstemperatur $kT_2$ des Dampfgemischs ermittelt wird,

b) die Temperaturen $T_2$ und $T_3$ des aus dem Kondensator (30) austretenden und des in den Kondensator (30) eintretenden Verbraucherkreislauffluids gemessen werden,

c) optional die Temperatur $T_4$ des aus dem Kondensator (30) austretenden Fluids des Kreisprozesses gemessen wird,

d) in festgelegten zeitlichen Abständen eine Stellgröße A1 ermittelt wird gemäß der Formel:

$$A1 = \left( kT_2 - \frac{(T_2+T_3)}{2} + SD \right);$$

optional gemäß der Formel:

$$A1 = \left( kT_2 - \frac{(T_2+T_3)}{2} + SD \right) - T_4;$$

wobei SD eine festgelegte Solldifferenztemperatur darstellt und alle Temperaturen in Kelvin angegeben sind, und

e) das Expansionsventil (40) so gesteuert wird, dass:

iv. das Expansionsventil (40) weiter geschlossen wird, wenn die Stellgröße A1 negativ ist,

v. das Expansionsventil (40) in seiner Stellung unverändert belassen wird, wenn die Stellgröße A1 null ist, und

vi. das Expansionsventil (40) weiter geöffnet wird, wenn die Stellgröße A1 positiv ist.

3. Verfahren nach Anspruch 1 oder 2, **dadurch gekennzeichnet, dass**:

a) Ein Druck $P_2$ des Fluids an einer Stelle hinter dem Expansionsventil (40) gemessen wird,

b) eine dem Mischungsverhältnis und dem Druck $P_2$ des expandierten Fluids entsprechende Verdampfungstemperatur $kT_7$ des Fluids im Verdampfer (50) ermittelt wird,

c) die Temperaturen $T_6$ und $T_5$ des aus dem Verdampfer (50) austretenden und des in den Verdampfer (50) eintretenden Energiequellenkreislauffluids gemessen werden,

d) optional die Temperatur $T_7$ des aus dem Verdampfer (30) austretenden Fluids des Kreisprozesses gemessen wird,

e) in festgelegten zeitlichen Abständen eine Stellgröße A2 ermittelt wird gemäß folgender Formel:

$$A2 = \left( kT_7 - \frac{(T_5 + T_6)}{2} + SD \right)$$

optional gemäß der Formel:

$$A2 = \left( kT_7 - \frac{(T_5 + T_6)}{2} + SD \right) - T_7$$

wobei SD eine festgelegte Solldifferenztemperatur darstellt und alle Temperaturen in Kelvin angegeben sind, und

f) die Lösungsmitteldrossel (56) so gesteuert wird, dass:

IV. das Lösungsmitteldrossel (56) weiter geschlossen wird, wenn die Stellgröße A2 negativ ist, (um den Druck im Verdampfer zu erhöhen),

V. die Lösungsmitteldrossel in ihrer Stellung unverändert belassen wird, wenn die Stellgröße A null ist, und

VI. das Lösungsmitteldrossel (56) weiter geöffnet wird wenn die Stellgröße A positiv ist, (um den Druck im Verdampfer zu reduzieren)

4. Verfahren nach Anspruch 2 oder 3, **dadurch gekennzeichnet, dass** die Solltemperaturdifferenz SD in einem Bereich von 0,2 K bis 7 K, vorzugsweise in einem Bereich von 1,5 K und 5 K liegt.

5. Verfahren nach einem der vorhergehenden Ansprüche 2 bis 4, **dadurch gekennzeichnet, dass** die Temperaturen $T_2$ und $T_3$ des aus dem Kondensator (30) austretenden und des in den Kondensator (30) eintretenden Verbraucherkreislauffluids in einem Bereich 20°C bis 60°C vorzugsweise in einem Bereich von 30°C bis 50°C liegen.

6. Verfahren nach einem der vorhergehenden Ansprüche 2 bis 5, **dadurch gekennzeichnet, dass** das Mischungsverhältnis einem Anteil von Kältemitteldampf von 15% bis 100% am Dampfgemisch entspricht.

7. Verfahren nach einem der vorhergehenden Ansprüche 2 bis 6, **dadurch gekennzeichnet, dass** die Temperaturen $T_6$ und $T_5$ des aus dem Verdampfer (50) austretenden und des in den Verdampfer (50) eintretenden Energiequellenkreislauffluids in einem Bereich von -20 °C bis +20 °C, vorzugsweise in einem Bereich von - 15°C bis +15°C liegen.

8. Verfahren nach einem der vorhergehenden Ansprüche, **dadurch gekennzeichnet, dass** zur Ermittlung des Mischungsverhältnisses des Dampfgemischs eine hinterlegte Tabelle oder Formel verwendet wird, mittels derer Werte für das Mischungsverhältnis als Funktion von Temperatur $T_1$ und der Druck $P_1$ abgeleitet werden.

9. Verfahren nach einem der vorhergehenden Ansprüche 2 bis 8, **dadurch gekennzeichnet, dass** zur Ermittlung der Kondensationstemperatur $kT_2$ und / oder der Verdampfungstemperatur $kT_7$ eine hinterlegte Tabelle oder Formel verwendet wird, mittels derer Werte für die jeweilige Temperatur als Funktion von des Drucks und des Mischungsverhältnisses abgeleitet werden.

10. Verfahren nach einem der vorhergehenden Ansprüche, **dadurch gekennzeichnet, dass** zum mindesten vorübergehend Erreichen eines festgelegten erhöhten Temperaturbereichs im Verbraucherkreislauf ein Heißgasmodus vorgesehen ist, in welchem das Expansionsventil (40) so eingestellt wird, dass das Dampfgemisch vor den Eintritt in das Expansionsventil (40) einen Druck $P_1$ aufweist, der einem festgelegten maximalen Hochdruckwert entspricht.

11. Verfahren nach Anspruch 10, **dadurch gekennzeichnet, dass** im Heißgasmodus im Kondensator (30) keine Kondensation mehr stattfindet.

12. Verfahren nach einem der vorhergehenden Ansprüche, **dadurch gekennzeichnet, dass** als Kältemittel Ammoniak und als Lösungsmittel Wasser verwendet wird.

FIG. 1

EP 3 933 304 A1

Europäisches
Patentamt

European
Patent Office

Office européen
des brevets

# EUROPÄISCHER RECHERCHENBERICHT

**Nummer der Anmeldung**

EP 21 18 1048

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 109 990 366 A (STATE POWER INVESTMENT CORPORATION SCIENCE &AMP TECH RESEARCH INSTITUT) 9. Juli 2019 (2019-07-09) | 1,10-12 | INV. F25B15/02 F25B15/04 |
| A | * Absätze [0020] - [0038]; Abbildung 1 * ----- | 2-9 | F25B25/00 |
| A | EP 3 285 025 A1 (BANGHERI ANDREAS [AT]) 21. Februar 2018 (2018-02-21) * Absätze [0036] - [0040]; Abbildung 2 * ----- | 1-12 | |
| A | US 4 596 122 A (KANTNER ALEXANDER [DE]) 24. Juni 1986 (1986-06-24) * Spalten 7-12; Abbildungen 1, 2 * ----- | 1-12 | |

**RECHERCHIERTE SACHGEBIETE (IPC)**

F25B

Der vorliegende Recherchenbericht wurde für alle Patentansprüche erstellt

| Recherchenort | Abschlußdatum der Recherche | Prüfer |
|---|---|---|
| München | 2. November 2021 | Amous, Moez |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes
    Dokument

EPO FORM 1503 03.82 (P04C03)

**EP 3 933 304 A1**

**ANHANG ZUM EUROPÄISCHEN RECHERCHENBERICHT
ÜBER DIE EUROPÄISCHE PATENTANMELDUNG NR.**

EP 21 18 1048

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2021

| Im Recherchenbericht angeführtes Patentdokument | Datum der Veröffentlichung | Mitglied(er) der Patentfamilie | Datum der Veröffentlichung |
|---|---|---|---|
| CN 109990366 A | 09-07-2019 | KEINE | |
| EP 3285025 A1 | 21-02-2018 | EP 3285025 A1<br>US 2018051919 A1 | 21-02-2018<br>22-02-2018 |
| US 4596122 A | 24-06-1986 | KEINE | |

Für nähere Einzelheiten zu diesem Anhang : siehe Amtsblatt des Europäischen Patentamts, Nr.12/82

EPO FORM P0461

**12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1045214 A2